# EUROPEAN PATENT APPLICATION

(11) **EP 0 651 488 A1**
(43) Date of publication of application: **03.05.1995**
(21) Application number: 94307344.5
(22) Date of filing: 06.10.1994
(51) Int. Cl.: H02H 3/10, H01H 83/20

(54) **An electrical protection device**

(30) Priority: 27.10.1993 ZA 938009
(71) Applicant: CIRCUIT BREAKER INDUSTRIES LIMITED, Elandsfontein Transvaal Province (ZA)
(72) Inventor: Bagalini, Dante, Mountain View, Johannesburg (ZA); Tsiaparis, Andrew, Kelvin, Johannesburg (ZA)
(74) Representative: Hackett, Sean James

(57) **Abstract**

An electrical protection device 10 includes a detecting means 12 for detecting a fault and for generating an output signal upon detection of such a fault. A latch device 14, responsive to the output signal is provided for disconnecting an electrical supply from a load upon receipt of the output signal.

## Description

**THIS INVENTION** relates to a protection device. More particularly, the invention relates to an electrical protection device.

According to the invention, there is provided an electrical protection device which includes
a detecting means for detecting a fault and for generating an output signal upon detection of such a fault; and
a latch device, responsive to the output signal, for disconnecting an electrical supply from a load upon receipt of the output signal.

Preferably, the detecting means and the latch device are arranged in a common housing. Then, the latch device is operable remote from the housing. In addition, the latch device may be operable at the housing.

The detecting means may comprise a plurality of detecting units for detecting various types of faults, the latch device being responsive to an output signal from any one of the detecting units. Typically, in a circuit breaker-type application, the detecting means may comprise an over-current detecting unit, a short circuit detecting unit and an earth leakage detecting unit.

The latch device may be a semiconductor device or, instead, the latch device may be an electromechanical device.

It will be appreciated that, by means of the latch device, the need for local operation is obviated as the device can be operated remotely by means of a suitable switching arrangement. Further, the need for additional electrical apparatus to facilitate remote operation is obviated.

The invention is now described by way of example with reference to the accompanying diagrammatic drawing which shows a schematic block diagram of an electrical protection device, in accordance with the invention.

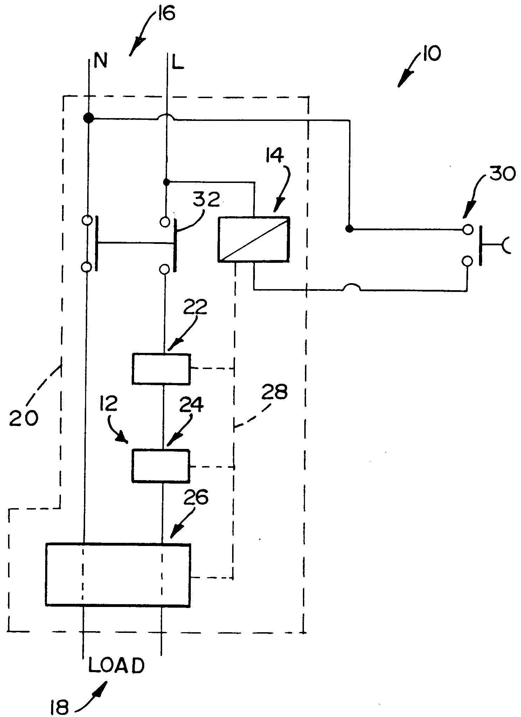

Referring to the drawing, an electrical protection device, in accordance with the invention, is illustrated and is designated generally by the reference numeral 10.

The device 10 includes a detecting means 12 for detecting a fault and for generating an output signal when such fault is detected. A latch device, or latch, 14 is responsive to said output signal and disconnects an electrical supply 16 from a load 18 upon receipt of said output signal.

The detecting means 12 and the latch 14 are arranged in a common housing 20.

The device 10 is intended particularly for use in circuit breaker-type applications to replace a circuit breaker. Thus, the detecting means 12 comprises a plurality of detecting units 22, 24 and 26 for detecting various types of faults. The detecting unit 22 is operable to detect an overcurrent fault, the detecting unit 24 is operable to detect a short circuit fault and the detecting unit 26 is operable to detect an earth leakage fault.

The detecting units 22, 24 and 26 are connected by a line 28 to the latch 14. The latch 14 is responsive to a signal output from any one of the detecting units 22, 24, 26.

A remote operating element in the form of a switch 30 is connected to the latch 14 for facilitating remote operation of said latch 14.

The latch 14 controls a set of contacts 32 for making or breaking an electrical connection between the supply 16 and the load 18. In this regard, the latch 14 can either be in the form of a semiconductor device or it may be an electro-mechanical device such as a latching relay.

Hence, in use, under normal operating conditions, the contacts 32 are closed and the load 18 is connected to the supply 16. In the event of a fault condition arising and being detected by the appropriate unit 22, 24 or 26, a signal is sent along line 28 to the latch 14 causing it to change state. This results in the contacts 32 disconnecting the load 18 from the supply 16 in a circuit breaker-like manner.

For re-connecting the supply 16 to the load 18, either the contact 32 can be closed manually or the latch 14 can be operated remotely by means of the switch 30.

Hence, it is a particular advantage of the invention that a protection device 10 is provided which performs a circuit breaker-like operation but which has the added advantage that it can be operated remotely. In this regard, it is a problem with a conventional circuit breaker that it must be operated locally by means of a handle fitted on an accessible area of a housing of the circuit breaker. If remote operation is required, an additional electrical apparatus must be used. This problem is, to a large extent, overcome by means of the device 10.

## Claims

1. An electrical protection device which includes
a detecting means for detecting a fault and for generating an output signal upon detection of such a fault; and
a latch device, responsive to the output signal, for disconnecting an electrical supply from a load upon receipt of the output signal.

2. The protection device as claimed in Claim 1 in which the detecting means and the latch device are arranged in a common housing.

3. The protection device as claimed in Claim 2 in which the latch device is operable remote from the housing.

4. The protection device as claimed in any one of the preceding claims in which the detecting means comprises a plurality of detecting units for detecting various types of faults, the latch device being responsive to an output signal from any one of the detecting units.

5. The protection device as claimed in Claim 4 in which the detecting means comprises an over-current detecting unit, a short circuit detecting unit and an earth leakage detecting unit.

6. The protection device as claimed in any one of the preceding claims in which the latch device is a semiconductor device.
